# EUROPÄISCHE PATENTSCHRIFT

(11) **EP 1 157 948 B1**
(45) Veröffentlichungstag und Bekanntmachung des Hinweises auf die Patenterteilung: **23.10.2002**
(21) Anmeldenummer: 00110883.6
(22) Anmeldetag: 23.05.2000
(51) Int. Cl.: B65G 1/08, B65G 1/137, B65G 1/02, A47B 53/00

(54) **Verfahren sowie Vorrichtung zum Zuführen von Grossgebinden von Kommissioniergütern zu einer Abkommissionierstelle**
Method and device for feeding packaging units of consumer goods to a pick-up station in an order picking system
Procédé et dispositif pour amener des ensembles d'emballages de produits de consommation à une station de prélèvelement dans un système de préparation de commandes

(43) Veröffentlichungstag der Anmeldung: 28.11.2001
(73) Patentinhaber: NEDCON MAGAZIJNINRICHTING B.V., NL-7000 AA Doetinchem (NL)
(72) Erfinder: de Jong, Leen-Pieter, 7051 GN Varsseveld (NL)
(74) Vertreter: Christophersen & Partner

(56) Entgegenhaltungen:
- EP-A- 0 888 983
- US-A- 4 662 511
- US-A- 5 350 270

## Beschreibung

Die Erfindung betrifft eine Vorrichtung zum Zuführen von Großgebinden von Waren, insbesondere von Kommissioniergütem, wie beispielsweise Paletten, zu einer Abkommissionierstelle mit einer geneigten, in der Abkommissionierstelle mündenden Zuführstrecke, welche wenigstens zwei unter Belassung eines Zwischenabstandes im wesentlichen parallel angeordnete Laufbahnen aufweist.

Bei der Lagerhaltung von Waren oder ähnlichen Gütern ist es allgemein üblich, derartige Güter von geringem Volumen zu größeren Gebinden zusammenzufassen, welche dann separat beispielsweise in Regallagern eingelagert werden. Unter Großgebinden im Sinne dieser Erfindung sind dabei insbesondere Paletten, Drahtkäfige, Kartons und ähnliche Behälter, die zur Aufnahme einer Vielzahl von kleindimensionierten Artikeln geeignet sind, zu verstehen.

Soll nun eine bestimmte Anzahl der in Großgebinden zusammengefaßten Artikel ausgelagert werden, so ist es notwendig, die Großgebinde dem Lager, beispielsweise dem Regallager, zu entnehmen, das Großgebinde zu öffnen und die gewünschte Anzahl der auszulagernden Artikel zu entnehmen. Dieser Vorgang wird auch als Abkommissionieren bezeichnet, wobei die in Großgebinden zusammengefaßten Artikel Kommissioniergüter genannt werden.

Gewöhnlich werden die Großgebinde zu diesem Zwecke einer Abkommissionierstelle zugeführt, an denen das eigentliche Abkommissionieren dann per Hand oder gegebenenfalls automatisch durchgeführt wird. Es ist im Stand der Technik bekannt, die Großgebinde dem Lager mit entsprechenden Hilfsmitteln, beispielsweise im Falle eines Regallagers mit einem Regalbediengerät, zu entnehmen, sie auf einer in der Abkommissionierstelle mündenden Zuführstrecke abzusetzen und sie dann über Transportmittel in die Abkommissionierstelle zu verbringen. Hierzu werden verschiedentliche Möglichkeiten angegeben.

Zum einen kann das Bewegen entlang der Zuführstrecke mittels motorisch angetriebener Transportmittel geschehen. Hierzu sind beispielsweise motorisch angetriebene Förderbänder vorgesehen.

Ein weiterer Ansatz besteht darin, zum Bewegen des Großgebindes entlang der Zuführstrecke die durch das Großgebinde selbst ausgeübte Schwerkraft zu nutzen. Hierzu ist eine zur Horizontalen geneigte Zuführstrecke vorgesehen, welche als Transportmittel Rollenbahnen aufweist. Das Großgebinde, beispielsweise eine Palette, wird auf der Rollenbahn eingangs der Zuführstrecke abgesetzt und bewegt sich aufgrund der eigenen Schwerkraft entlang der einzelnen Rollen der Rollenbahn in Richtung der Abkommissionierstelle, in der die Zuführstrecke mündet. Dort angekommen kann mit dem Abkommissionieren der gewünschten Menge an Artikeln begonnen werden. Ist das Großgebinde dann komplett entleert, wird es aus der Abkommissionierstelle entnommen, und ein weiteres Großgebinde kann längst der Zuführstrecke nachgeführt werden.

Weiterhin ist es bekannt, die Zuführstrecken derart zu dimensionieren, daß dort jenseits der Abkommissionierstelle ein oder mehrere Großgebinde, beispielsweise Paletten, abgestellt werden können, welche dann, wenn das in der Abkommissionierstelle befindliche Großgebinde abkommissioniert und aus der Abkommissionierstelle entfernt ist, zu dieser verbracht werden können. Der Vorteil einer derartigen Lösung liegt darin, daß mit diesem System die sogenannte First-In-First-Out-Technik realisiert werden kann, bei der ein zuerst auf der Zuführstrecke abgestelltes Großgebinde auch zuerst abkommissioniert wird. Dies ist insbesondere bei Artikeln von begrenzter Lagerfähigkeit von Bedeutung, da hierbei darauf zu achten ist, daß die zuerst eingelagerten Artikel gerade wegen ihrer begrenzten Lagerfähigkeit auch zuerst wieder ausgelagert werden, um einen maximal tolerablen Zeitrahmen nicht zu überschreiten.

Es hat sich jedoch herausgestellt, daß insbesondere im Zusammenhang mit palettiertem Gut die unter Ausnutzung der den Großgebinden eigenen Schwerkraft arbeitende Zuführstrecken mit darin integrierten Rollenbahnen bestimmte Probleme aufwerfen. Die verschiedenen gängigen Paletten (beispielsweise die Europalette oder die in den Vereinigten Staaten von Amerika gebräuchliche GMA-Palette) sind für gewöhnlich aus Holz gefertigt. Befindet sich nun eine Palette in der Abkommissionierstellung einer vorbekannten Vorrichtung mit Rollenbahnen, und ist eine weitere Palette auf der Rollenbahn in einer Wartestellung abgestellt, so lastet das auf der Unterseite der Palette befindliche, mit den Rollen der Rollenbahn in Kontakt stehende Holz mit der von dem palettierten Gut erzeugten Gewichtskraft auf der Rollenbahn. Hierdurch drücken sich die Rollen der Rollenbahn in das Holz der Palette, so daß die Rollen teilweise in das Holz der Palette einsinken. Dauert nun das Abkommissionieren der in der Abkommissionierstelle befindlichen Palette über einen längeren Zeitraum an, bzw. wird das Abkommissionieren durch Arbeitsunterbrechung (z. B. ein Wochenende) für einen längeren Zeitraum unterbrochen, so kann es vorkommen, daß sich die Rollen der Rollenbahn verhältnismäßig tief in das Holz auf der Unterseite der Palette eindrücken. Wird dann die in der Abkommissionierstelle befindliche Palette entleert und entnommen, und soll die nächste, auf der Rollenbahn abgestellte Palette in Richtung der Abkommissionierstelle nachgeführt werden, so kann es nun vorkommen, daß die Rollen der Rollenbahn sich soweit in das Holz auf der Unterseite der Palette eingedrückt haben, daß die Palette sich nicht mehr über die Rollen der Rollenbahn bewegen läßt. Sie wird durch die in das Holz eingedrückten Rollen vielmehr in ihrer Position gehalten.

Anstatt, daß wie vorgesehen die Palette allein durch ihre Schwerkraft von selbst in Richtung der Abkommissionierstelle fortschreitet, muß nun durch zusätzliche Maßnahmen nachgeholfen werden. Schlimmstenfalls, wenn selbst durch zusätzlichen Kraftaufwand die Palette nicht von den in ihrer Unterseite eingedrückten Rollen der Rollenbahn zu lösen ist, muß die Palette an Ort und Stelle, d. h. auf der Zuführstrecke, zumindest teilweise abkommissioniert werden, um durch eine Gewichtserleichterung möglicherweise die Palette doch noch in Richtung der Abkommissionierstelle bewegen zu können.

Solche Vorfälle unterbrechen nicht nur den Abkommissionierbetrieb, sondern binden Arbeitskräfte, die die Freisetzung der auf der Rollenbahn festgesetzten Palette bewirken müssen.

Aus der US 5,350,270 ist eine Vorrichtung der eingangs genannten Art bekannt, in der Paletten zum Zuführen zu einer Kommissionierstelle auf einen in einer geneigten Zuführstrecke befindlichen Wagen gestellt und zusammen mit dem Wagen angetrieben durch Schwerkraft in Richtung der Abkommissionierstelle bewegt werden. Bei der in dieser Druckschrift offenbarten Vorrichtung erstreckt sich ein einziger Wagen über die gesamte Breite der Zuführstrecke. Querstreben des Wagens erstrecken sich dabei über einen zwischen zwei Führungsschienen liegenden Bereich. Darüber hinaus sind die Führungsschienen durch Querstreben miteinander verbunden. Durch diese Querstreben des Wagens ebenso wie die zwischen den Laufschienen verlaufenden Streben ist es nicht möglich, eine einmal beispielsweise in der Abkommissionierstelle abgestellte Palette aus ihrer Stellung mit Hilfe einer Transportgabel eines Gabelstaplers oder ähnlichen Gerätes wieder zurückzuholen. In Kommissionierlagern, in denen Vorrichtungen der eingangs genannten Art Verwendung finden, werden einzelne Großgebinde in der Kommissionierstelle vielfach nicht bis zu Ende abkommissioniert, sondern müssen lediglich zu einem Teil geleert aus der Kommissionierstelle wieder in Richtung des rückwärtigen Lagerbereichs zurückgeholt werden. Dies ist bei der in der US 5,350,270 offenbarten Vorrichtung nur mit erhöhtem Aufwand möglich.

Davon ausgehend liegt der Erfindung die **Aufgabe** zugrunde, eine Vorrichtung der eingangs genannten Art anzugeben, mit der die zum Stand der Technik geschilderten Probleme gelöst werden.

Zur **Lösung** der genannten Aufgabe wird mit der Erfindung eine Vorrichtung der eingangs genannten Art vorgeschlagen mit mindestens zwei ein Wagenpaar bildenden Wagen, wobei jeder der auf Laufrädern laufenden Wagen in einer der Laufbahnen zum Verfahren entlang der jeweiligen Laufbahn angeordnet ist, wobei die Wagen jeweils absenkbare bzw. anhebbare Auflageflächen aufweisen und wobei ein Großgebinde auf den Auflageflächen des Wagenpaares abstellbar ist.

Dadurch, daß mindestens zwei ein Wagenpaar bildende Wagen vorgesehen sind, die jeweils in einer Laufbahn laufen, kann zwischen den Wagenpaaren und zwischen den Laufbahnen ein Abstand vorgesehen sein, in den zum Rückholen der Großgebinde aus der Zuführstrecke Hilfsmittel, beispielsweise ein Funktionselement eines Regalbediengerätes, gelangen und somit das Rückholen des Großgebindes vereinfachen kann. Durch die Höhenverstellbarkeit der Auflageflächen der Wagen, kann eine eingangs der Zuführstrecke auf den Wagen abgestellte Palette durch Absenken der Abstellflächen in einer Abkommissionierstelle abgestellt werden. Die Wagen mit den derart abgesenkten Auflageflächen können unter dem abgestellten Großgebinde hinweg wieder in Richtung der Eingangsposition der Zuführstrecke bewegt werden.

Dadurch, daß das Großgebinde auf einem vorläufig eingangs der geneigten, in der Abkommissionierstelle mündenden Zuführstrecke positionierten Fördermittel abgestellt wird und das Fördermittel anschließend gemeinsam mit dem Großgebinde in Richtung der Abkommissionierstelle bewegt wird, kann selbst bei längeren Verweilzeiten des Großgebindes auf dem Fördermittel, beispielsweise weil die Abkommissionierstelle noch mit einem zuvor vollständig abzukommissionierenden Großgebinde belegt ist, das Erstere nicht durch Verformung festgelegt wird, wie sie durch Eindrücken der Rollen von Rollenbahnen in das Holz der Unterseite von Paletten eintreten kann. Das Großgebinde ist auf der Oberfläche des Fördermittels abgestellt, wobei das Fördermittel selbst sich mit den darauf abgestellten Großgebinden in Richtung der Abkommissionierstelle bewegt. Somit kann das Fördermittel problemlos wieder in Bewegung versetzt werden, wenn denn das Zuführen des Großgebindes zu der Abkommissionierstelle nach einer längeren Wartezeit in der Zuführstrecke fortgesetzt werden soll. Die Oberfläche des Transportmittels kann darüber hinaus in vorteilhafter Weise eben ausgebildet sein, so daß auch bei längerer Standzeit des Großgebindes auf dem Fördermittel eine Beschädigung des Großgebindes durch Unebenheiten auf der Oberfläche des Fördermittels zuverlässig verhindert wird.

Die Neigung der Zuführstrecke ist abhängig von dem verwendeten Transportmittel so zu wählen, daß die parallel zur Zuführungsstrecke gerichtete Komponente der von dem Großgebinde erzeugten Gewichtskraft ausreicht, um die Reibung des Fördermittels zu überwinden und einen durch die Gewichtskraft bewirkten Antrieb in Richtung der Abkommissionierstelle zu erzeugen.

Das Großgebinde kann in der Abkommissionierstelle von den Wagen auf einer Abstellvorrichtung abgestellt werden, und die entleerten Wagen können dann in die Ausgangsposition eingangs der Förderstrecke zurückgeführt werden. Somit stehen die Wagen zum Zuführen eines weiteren Großgebindes zur Abkommissionierstelle zur Verfügung. Die Wagen können nun, solange das auf der Abstellvorrichtung in der Abkommissionierstelle abgestellte Großgebinde diese blockiert, mit einem weiteren darauf abgestellten Großgebinde in einer Wartestellung verbleiben.

Das Abstellen des Großgebindes auf der Abstellvorrichtung erfolgt durch Absenken der Auflagefläche der Wagen, auf denen das Großgebinde ruht. Die Wagen fahren also mit dem auf den Auflageflächen abgestellten Großgebinde in die mit einer Abstellvorrichtung versehene Abkommissionierstelle, und dort werden, beispielsweise automatisch ausgelöst, die Auflageflächen mit dem darauf befindlichen Großgebinde soweit abgesenkt, daß diese unterhalb des Niveaus der Abstellvorrichtung geführt werden, so daß das Großgebinde nunmehr auf der Abstellvorrichtung und nicht mehr auf den Auflageflächen der Wagen ruht. Beispielsweise können hierzu die Auflageflächen der Wagen hinsichtlich ihres Abstandes zu den Laufrädern höhenverstellbar sein.

Die so entleerten Wagen können durch eine von einem Gegengewicht oder von einer Feder erzeugte, in Richtung der Ausgangsposition gerichtete Kraft in die Ausgangsposition zurückgeführt werden. Somit kann auch hier auf einen motorischen Antrieb verzichtet werden und die Wagen werden einfach durch eine entsprechend ausgelegte Feder oder ein anforderungsgemäß bestimmtes Gegengewicht rückwärts der Laufbahn der geneigten Zuführungsstrecke wieder auf das höher gelegene Niveau der eingangs der Zuführungsstrecke gelegenen Ausgangsposition zurück verbracht.

Für den Fall, daß außer einem in der Abkommissionierstelle befindlichen Großgebinde lediglich ein weiteres Großgebinde in einer Warteposition in der Zuführstrecke aufgenommen werden können soll, genügt es jeweils ein Wagenpaar vorzusehen. Wenn aber neben einem in der Abkommissionierstelle befindlichen Großgebinde zwei weitere Großgebinde in Wartepositionen entlang der Zuführstrecke befindlich sein können sollen, müssen mindestens zwei Wagenpaare vorgesehen sein.

Gemäß einem weiteren Merkmal der Erfindung sind an den Enden der Zuführstrecke Anschläge vorgesehen, welche eine Verstellung des Abstandes der Auflageflächen der Wagen zu deren Laufrädern auslösen, wenn die Wagen an diesen anschlagen. So können die Auflageflächen für das Großgebinde an den Wagen abgesenkt werden, sobald die Wagen an dem jeweiligen Anschlag in der Abkommissionierstelle anschlagen, so daß das Großgebinde automatisch auf der Abstellvorrichtung abgestellt wird. Schlagen die Wagen dann nach dem erfolgten Zurückführen an den zweiten, eingangs der Zuführstrecke vorgesehenen Anschlägen an, so ist vorgesehen, daß die Abstellflächen wiederum in ihre erhöhte Position zurückverbracht werden, um somit für. die Aufnahmen eines weiteren Großgebindes bereitzustehen.

Weitere vorteilhafte Weiterbildungen der Erfindung sind in den abhängigen Ansprüchen gekennzeichnet.

Weitere Vorteile der Erfindung ergeben sich aus den anhand der beiliegenden Zeichnungen beschriebenen Ausführungsbeispiele. Dabei zeigen:
- Fign. 1a und 1b: schematische Darstellungen einer Ausführungsform einer erfindungsgemäßen Vorrichtung mit zwei parallel laufenden Wagen für ein Zwei-Paletten-System;
- Fign. 2a bis 2c: eine schematische Darstellung einer Ausführungsform einer erfindungsgemäßen Vorrichtung mit zwei parallel geführten Wagenpaaren in einem Drei-Paletten-System;
- Fig. 3: schematisch den Aufbau eines Wagens einer erfindungsgemäßen Vorrichtung zum Zuführen von Großgebinden von Kommissioniergütern zu einer Abkommissionierstelle in vier unterschiedlichen Positionen;
- Fig. 4: zwei verschiedene Ausführungsbeispiele für einen Absenkmechanismus zum Höhenverstellen der Auflagefläche eines Förderwagens der Erfindung;
- Fign. 5a und 5b: schematisch einen Ablauf bei Verwendung der erfindungsgemäßen Vorrichtung in einem Zwei-Paletten-System und
- Fign. 6a bis 6c: schematisch den Ablauf bei Verwendung der erfindungsgemäßen Vorrichtung in einem Drei-Paletten-System.

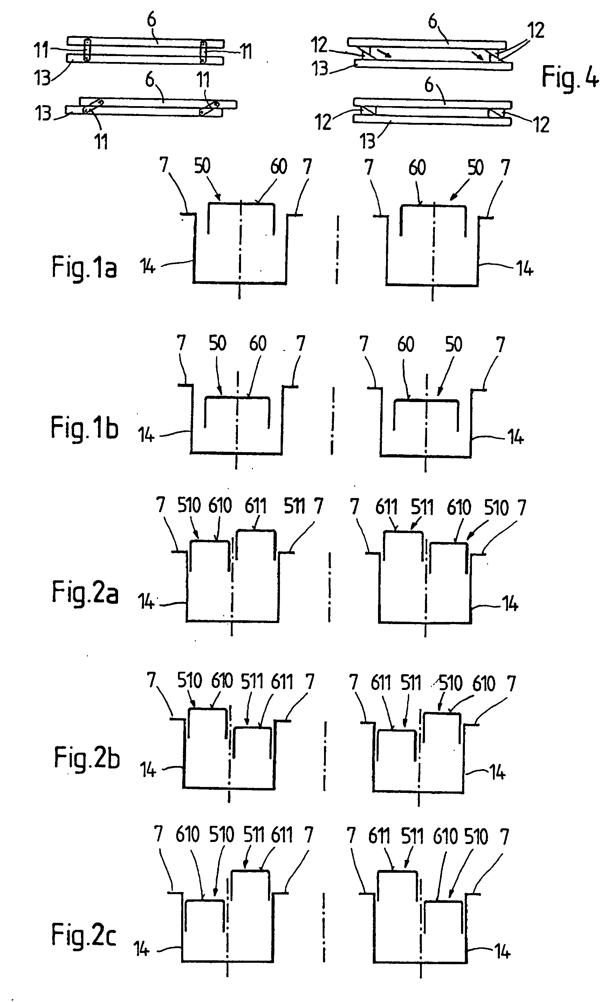

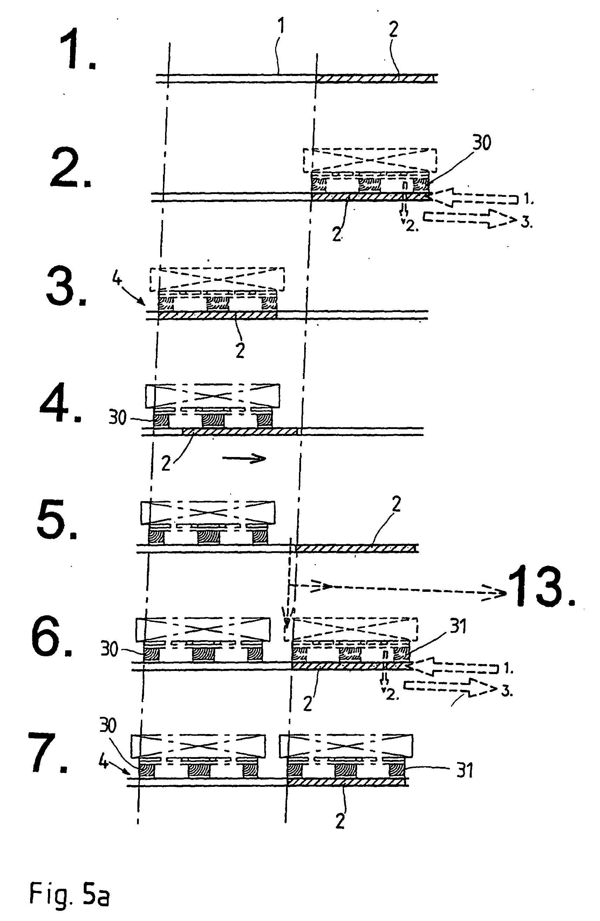

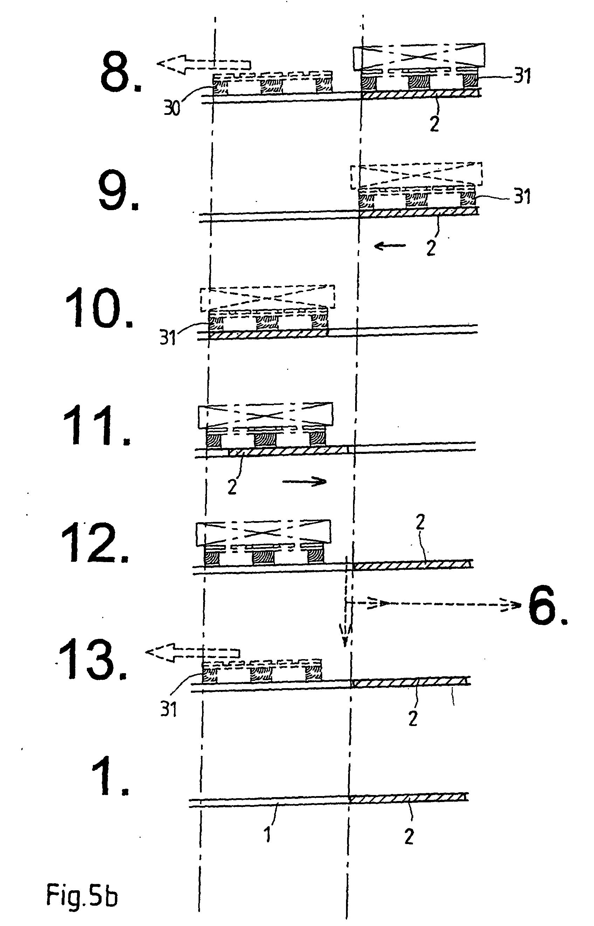

In den Fign. 1a sowie 1b ist schematisch eine mögliche Ausgestaltung der mit Wagen versehenen Zuführstrecken im Falle eines Zwei-Paletten-Systems dargestellt. Die Zuführstrecke weist zwei parallel angeordnete, nebeneinanderliegende Führungsschienen 14 für unabhängig voneinander parallel laufende Wagen 50 auf. Die Führungsschienen 14 sind in diesem Beispiel U-förmig ausgeformt und verfügen an ihren senkrechten Schenkeln über jeweils nach außen geführte Abwinkelungen, die als Abstellvorrichtung 7 dienen. In Fig. 5a ist dabei die Situation dargestellt, in der sich die Wagen in der Ausgangsposition befinden. Die Auflageflächen 60 der Wagen 50 ragen dabei in ihrer Höhe über die als Abstellvorrichtung 7 dienenden Abwinklungen der Führungsschienen 14 hinaus. Somit kann eine Palette auf die beiden Abstellflächen 60 der Wagen 50 aufgesetzt und die Wagen mit der darauf abgesetzten Palette oder mit einem anderen Großgebinde in Richtung der Abkommissionierstelle bewegt werden. In Fig. 5b ist die Situation dargestellt, in der die Auflageflächen 60 der Wagen 50 abgesenkt sind. Eine Palette (hier nicht gezeigt) ist auf den als Abstellvorrichtung 7 dienenden umgelenkten Abschnitten der Führungsschienen 14 abgestellt, und die Wagen 50 bewegen sich ohne die Paletten wieder in die Ausgangsposition zurück, wo ihre Auflageflächen 60 wieder angehoben werden.

In den Fign. 2a bis 2c ist analog zu den Fign. 1a und 1b eine schematische Lösung für das Drei-Paletten-System dargestellt. Wiederum sind zwei parallele Führungsschienen 14 entlang der Zuführstrecke angeordnet, wobei in diesem Falle in jeder Schiene jeweils zwei Wagen 510 und 511 mit entsprechenden Auflageflächen 610 sowie 611 vorgesehen sind.

Die Führungsschienen sind auch in diesem Falle U-förmig ausgebildet und weisen am Ende ihrer senkrechten Schenkel nach außen ragende Abwinklungen auf, die als Abstellvorrichtung 7 für Paletten oder sonstige Großgebinde dienen. In Fig. 2a ist die Ausgangsposition dargestellt, in der alle Auflageflächen 610 sowie 611 der Wagen 510 sowie 511 in der Hochposition befindlich sind. Zu erkennen ist, daß die Auflageflächen 611 des innenliegenden Wagenpaares 511 höher gelegen sind als die Auflageflächen 610 des außenliegenden Wagenpaares 510. Eine nunmehr in die Vorrichtung eingebrachte Palette oder ein anderes Großgebinde würde somit auf den Auflageflächen 611 der Wagen 511 abgestellt werden und die Wagen 511 würden sich mit der darauf abgestellten Palette oder einem anderen Großgebinde in Richtung der Abkommissionierstelle bewegen. Ist das innere Wagenpaar 511 nicht in der Ausgangsposition befindlich, sondern steht in einer Warteposition mit auf den Auflageflächen 611 abgestelltem Großgebinde, so kann ein daraufhin eingebrachtes Großgebinde auf den Auflageflächen 610 des Wagenpaares 510 abgestellt werden.

In Fig. 2b ist dargestellt, wie die Auflageflächen 611 des inneren Wagenpaares 511 im abgesenkten Zustand sich unterhalb des Niveaus der als Abstellvorrichtung 7 dienenden, umgelegten Endabschnitte der Schenkel der U-förmigen Führungsschiene 14 befinden. Eine auf den Auflageflächen 611 in die Abkommissionierstelle transportierte Palette ist nunmehr auf der Abstellvorrichtung 7 abgestellt, und die Wagen 511 werden in ihre Ausgangsposition zurückbewegt. Es ist hierbei auch zu erkennen, daß die Auflageflächen 611 der Wagen 511 deutlich unterhalb das Niveau der ausgestellten Auflageflächen 610 der äußeren Wagens 510 abgesenkt werden, so daß die Wagen 511 problemlos unter einer möglicherweise auf den Auflageflächen 610 abgestellten, mit dem Wagen 510 in einer Warteposition befindlichen Palette hindurchbewegt werden können.

In Fig. 2c ist die umgekehrte Situation dargestellt, in der die Auflageflächen 610 der äußeren Wagen 510 unterhalb des Niveaus der Abstellvorrichtung 7 und unterhalb des Niveaus der hochgestellten Auflageflächen 511 abgesenkt sind, so daß die Wagen 510 nach dem Abstellen der Palette oder eines anderen Großgebindes in der Abkommissonierstelle problemlos in die Ausgangsposition zurückbewegt werden können. In der Ausgangsposition werden die abgesenkten Auflageflächen 610 bzw. 611 des äußeren Wagenpaares 510 bzw. des inneren Wagenpaares 511 jeweils wieder in die ausgestellte Hochstellung überführt.

Zu erkennen ist in den Fign. 1a bis 2c ebenfalls, daß zwischen den Führungsschienen 14 ein Zwischenraum verbleibt, in den ein Funktionselement eines Regalbediengerätes (RBG) hineingeführt werden kann, um eine im System befindliche Palette oder ein anderes Großgebinde aufzunehmen und beispielsweise in ein Regallager zurückzuführen.

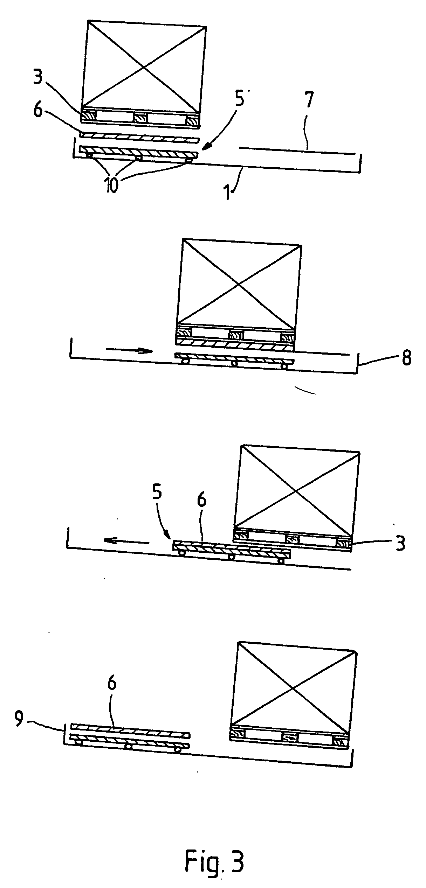

In Fig. 3 ist schematisch eine Möglichkeit der Ausführung eines einzelnen Wagens dargestellt. Dieser ist in vier verschiedenen Betriebsstellungen dargestellt. Auf der geneigten Zuführstrecke 1, an deren Ende eine mit 7 bezeichnete, hier schematisch dargestellte Abstellvorrichtung zu erkennen ist, läuft ein Wagen 5. Der Wagen verfügt über Rollen 10, mittels derer er reibungsarm auf der Zuführstrecke 1 bewegt werden kann. Der Wagen verfügt über eine Auflagefläche 6, die zwischen zwei Positionen höhenverstellbar ist. Befindet sich der Wagen eingangs der Zuführstrecke, so kann eine Palette 3 auf die Auflagefläche 6 aufgesetzt werden, und der Wagen bewegt sich, wie in der zweiten Darstellung von oben, gezeigt, durch Schwerkraft in Richtung der Abstellvorrichtung 7. Am Ende der Zuführstrecke 1 ist ein Anschlag 8 vorgesehen. Schlägt der mit der Palette 3 die geneigte Zuführstrecke abwärts rollende Wagen 5 gegen den Anschlag 8 an, so wird die Auflagefläche 6 abgesenkt, und die Palette 3 mit dem darauf befindlichen Kommissioniergütern wird auf der Abstellvorrichtung 7 abgestellt. In der dritten in dieser Figur gezeigten Situation ist dargestellt, wie der Wagen 5 mit der abgesenkten Auflagefläche 6 in die Ausgangsposition zurückbewegt wird. In der Ausgangsposition befindet sich ein weiterer Anschlag 9, der ein Anheben der Auflagefläche 6 bewirkt, wenn der Wagen gegen diesen Anschlag 9 stößt. Der Wagen ist nunmehr zur Aufnahme einer weiteren Palette bereit.

In Fig. 4 sind schematisch zwei verschiedene Lösungen zur Realisierung der Höhenverstellbarkeit der Auflagefläche 6 des Wagens 5 angegeben. Die erste hier dargestellte Möglichkeit besteht darin, die Auflagefläche 6 mit dem Wagengestell 13 über zwei starre, jeweils am Wagengestell 13 und an der Auflagefläche gelenkig angebrachte Koppelglieder 11 miteinander zu verbinden. Diese Ausführungsform ist sowohl in der Hochstellung als auch in der Tiefstellung abgebildet. Die zweite hier dargestellte Realisierungsmöglichkeit des Absenkmechanismus besteht darin, das Wagengestell 13 mit der Auflagefläche 6 über Gleitstücke 12 miteinander zu verbinden. Die Gleitstücke 12 verfügen dabei über zur Auflagefläche 6 geneigte Gleitflächen, die bei einer Relativverschiebung der Gleitstücke gegeneinander für eine Hoch- bzw. Tiefstellung der Auflagefläche 6 bezogen auf das Wagengestell 13 sorgen. Auch für diese Lösung sind schematisch sowohl die Hochstellung als auch die Tiefstellung dargestellt.

In den Fign. 5a sowie 5b ist schematisch der Ablauf bei Verwendung einer erfindungsgemäßen Vorrichtung in einem Zwei-Paletten-System dargestellt. Ein Zwei-Paletten-System ist ein solches System, bei dem während eine Palette sich in der Abkommissionierstelle befindet, eine weitere Palette der Vorrichtung zugeführt werden kann und in der Zuführstrecke in einer Warteposition verbleibt. Die Fign. 5a sowie 5b illustrieren den Ablauf anhand 13 unterschiedlicher Schritte. Für jeden der Schritte ist schematisch die geneigte Zuführstrecke 1 angedeutet.

Ein Fördermittel 2 in Form eines Wagenpaares befindet sich zu Beginn des Verfahrens im mit 1. bezeichneten Schritt in einer Ausgangsposition am oberen Ende der geneigten Zuführstrecke 1. In Schritt 2. wird eine erste Palette 30 auf dem Fördermittel abgestellt. Dies kann beispielsweise mittels eines Regalbediengerätes (RBG) geschehen, wie durch die gestrichelten Pfeile schematisch angedeutet ist. Das RGB fährt mit der Palette 30 in Richtung des in der Ausgangsposition befindlichen Fördermittels 2, senkt die Palette ab und stellt sie auf das Fördermittel 2, und wird dann ohne die Palette wieder aus dem Bereich der Zuführstrecke herausgeführt.

Das Fördermittel 2 setzt sich nun durch die von der Palette 30 ausgeübte Schwerkraft entlang der geneigten Zuführstrecke 1 in Richtung einer Abkommissionierstelle 4 in Bewegung.

In dem bei 3. gezeigten Schritt ist das Fördermittel 2 mit der darauf abgesetzten Palette 30 in der Abkommissionierstelle angelangt. Dort wird die Palette 30 auf einer Abstellvorrichtung abgestellt und das Fördermittel 2 wird durch eine Rückholkraft angetrieben erneut zu der Ausgangsposition zurück bewegt. Dies ist im 4. gezeigten Schritt angedeutet.

In der mit 5. bezeichneten Situation steht die Palette 30 auf einer Abstellvorrichtung in der Abkommissionierstelle 4, und das Fördermittel 2 ist in seiner Ausgangsposition angekommen. An den mit 5. dargestellten Schritt kann sich nun direkt der Schritt 13. anschließen, wie dies durch den verzweigten Pfeil angedeutet ist. Dieser Schritt wird später beschrieben.

Wenn sich an dem Schritt 5. nicht der Schritt 13. anschließt, so entsteht die unter 6. dargestellte Situation. Hier wird erneut mit einem RGB eine weitere Palette 31 auf dem in der Ausgangsposition befindlichen Fördermittel 2 abgestellt. Das Fördermittel 2 mit der darauf abgestellten Palette 31 bewegt sich gar nicht oder höchstens geringfügig in Richtung der Abkommissionierstelle, da diese noch mit der Palette 30 besetzt ist.

Unter 8. ist angedeutet, daß die Palette 30, die sich noch auf der Abstellvorrichtung befindet, vollständig abkommissioniert worden ist und aus dem System entfernt wird. Nun setzt sich wie in Schritt 9. angedeutet das Fördermittel 2 mit der darauf befindlichen Palette 31 in Richtung der Abkommissionierstelle ausgelöst durch die Schwerkraft der Palette 31 in Bewegung. Dort wird die Palette 31 auf der nunmehr frei gewordenen Abstellvorrichtung abgestellt (10.), und das Fördermittel 2 kehrt analog zu Schritt 4. in seine Ausgangsposition zurück.

Dort angekommen ist das Fördermittel 2 zur Aufnahme einer weiteren Palette bereit. Dies ist mit 12. dargestellt. Anschließend an diese Situation kann, wie mit den verzweigten Pfeilen angedeutet, sich wiederum Schritt 6. anschließen, wobei anstelle der dort dargestellten Palette 31 eine andere Palette auf dem Fördermittel 2 abgestellt wird. Alternativ kann sich Schritt 13. anschließen, in welchem die Palette 31 (für den Fall, daß Schritt 13. direkt nach Schritt 5. erfolgt, auch die Palette 30) vollständig abkommissioniert und aus dem System entfernt wird. Somit ist das Verfahren wieder in der Ausgangssituation angelangt.

Selbstverständlich kann während sämtlicher Schritte die der Ausgangsposition des Transportmittels 2 am nächsten gelegene Palette wieder rückwärts aus der Zuführstrecke entfernt werden. Dies kann beispielsweise mittels eines RGB's geschehen. So kann z. B. eine lediglich unvollständige abkommissionierte Palette aus der Abkommissionierstelle in das Lager zurückgeführt werden, wenn dies erforderlich ist.

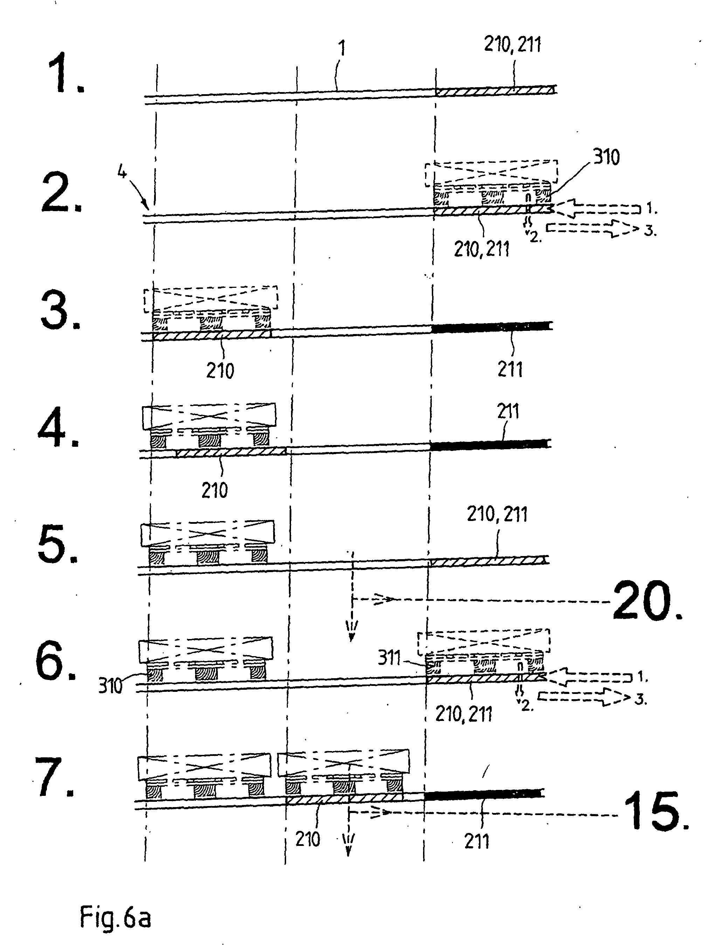

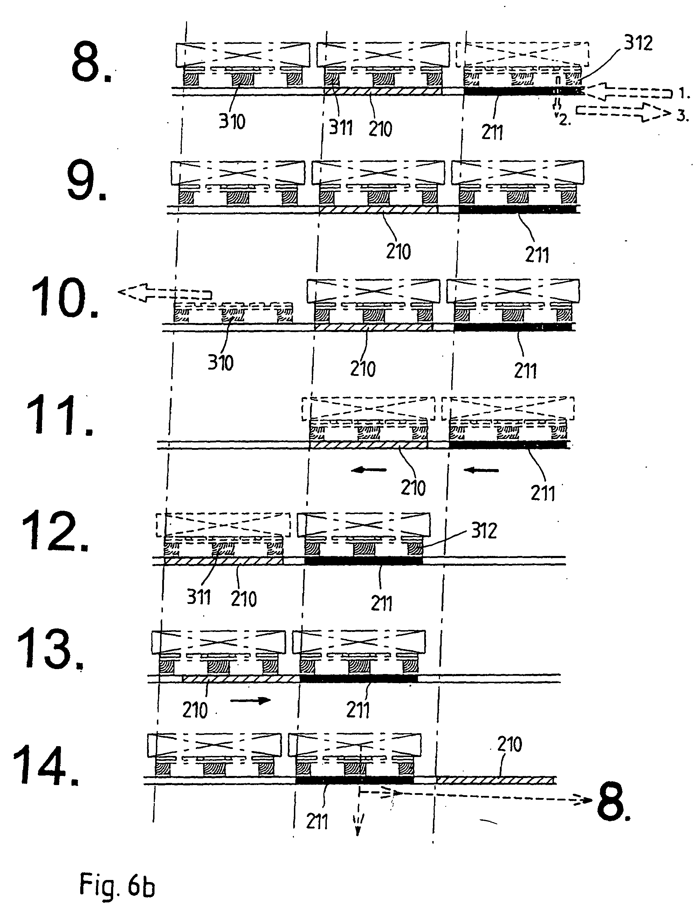

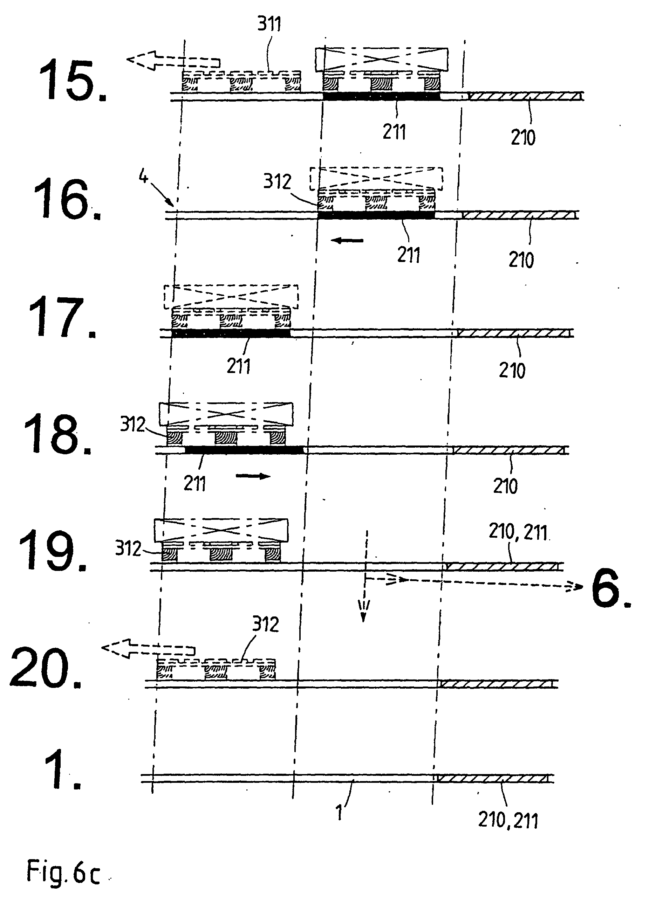

In den Fign. 6a bis 6c sind schematisch einzelne Etappen des Ablaufes bei Verwendung einer erfindungsgemäßen Vorrichtung in einem Drei-Paletten-System gezeigt. Unter einem Drei-Paletten-System soll ein solches System verstanden werden, bei dem neben einer in der Abkommissionierstelle befindlichen Palette zwei weitere Paletten in hintereinander liegenden Wartepositionen entlang der Zuführstrecke abgestellt sein können. Im Unterschied zu dem oben geschilderten, in den Fign. 1a sowie 1b dargestellten Ablauf, sind bei den hier dargestellten Ablauf für ein Drei-Paletten-System in der Förderstrecke 1 zwei Fördermittel 210 sowie 211 in Form von Wagenpaaren vorgesehen.

In der unter 1. gezeigten Ausgangssituation sind beide Fördermittel 210 sowie 211 in einer eingangs der Förderstrecke 1 gelegenen Ausgangsposition dargestellt. Dabei unterscheiden sich die Fördermittel 210 sowie 211 dahingehend, daß, wenn beide Fördermittel in der Ausgangssituation befindlich sind, lediglich das Fördermittel 210 eine Palette aufnehmen kann. Das Fördermittel 211 kann nur dann eine Palette aufnehmen, wenn das Fördermittel 210 nicht in der Ausgangsposition befindlich ist.

In der unter 2. dargestellten Position ist gezeigt, wie eine Palette 310 mittels beispielsweise eines RGB's auf dem Fördermittel 210 abgestellt wird. Das Fördermittel 210 setzt sich dann angetrieben durch die von der Palette ausgeübten Schwerkraft entlang der geneigten Zuführstrecke 1 in Richtung der Abkommissionierstelle 4 in Bewegung, bis schließlich die Palette 310, wie unter 3. gezeigt, in der Abkommissionierstelle angekommen ist.

Dort wird die Palette von dem Fördermittel 210 auf einer Abstellvorrichtung abgestellt, und das Fördermittel 210 kehrt, wie unter 4. dargestellt, angetrieben durch eine Rückholkraft in seine Ausgangsposition zurück. Während dieser genannten Schritte bleibt das Fördermittel 211 stets in der Ausgangsposition.

Ist wie unter 5. dargestellt, nur die erste Palette 310 auf der Abstellvorrichtung in der Abkommissionierstelle 4 abgestellt und sind die beiden Fördermittel 210 sowie 211 wieder in der Ausgangsposition, so kann von hier aus direkt der später beschriebene Schritt 20. erfolgen, wie dies durch die mit gestrichelten Pfeilen angedeutete Verzweigung dargestellt ist. Schließt sich jedoch der Schritt 6. an, so wird hier eine weitere Palette 311 beispielsweise mittels eines RBG's auf dem eingangs der Förderstrecke 1 in der Ausgangsposition befindlichen Fördermittel 210 abgestellt.

Das Fördermittel 210 setzt sich nun erneut, angetrieben durch die Schwerkraft der Palette 311, in Richtung der Abkommissionierstelle in Bewegung. Da die Abkommissionierstelle jedoch noch durch die Palette 310 belegt ist, bewegt sich das Fördermittel 210 mit der darauf abgestellten Palette 311 lediglich wie in 7. dargestellt bis in eine oberhalb der Abkommissionierstelle gelegene Warteposition. Das Fördermittel 211 ist dabei nach wie vor in seiner Ausgangsposition.

Nach dem unter 7. dargestellten Schritt kann der Ablauf nunmehr direkt zu dem unter 15. dargestellten Schritt springen, welcher später beschrieben wird. Anderenfalls schließt sich der Schritt 8. an, in welchem erneut beispielsweise mittels eines RBG's eine Palette 312 zu der Zuführstrecke 1 verbracht wird. Die dritte Palette 312 wird nunmehr auf dem einzigen noch in der Ausgangsposition befindlichen Fördermittel 211 abgestellt. Die Zuführstrecke 1 ist nun inklusive der Abkommissionierstelle 4 mit drei Paletten belegt und somit vollständig gefüllt. Das Fördermittel 211 mit der darauf abgestellten Palette 312 bewegt sich, da die Zuführstrecke in Richtung der Abkommissionierstelle 4 bereits mit zwei Paletten belegt ist, nun nicht oder höchstens geringfügig in Richtung der Abkommissionierstelle.

Wird nun, wie unter 10. dargestellt, die erste Palette 310 vollständig abkommissioniert und aus dem System entfernt, so können sowohl das Fördermittel 210 als auch das Fördermittel 211 angetrieben durch die jeweilige Schwerkraft der Paletten 311 bzw. 312 sich in Richtung der Abkommissionierstelle 4 bewegen. Das Fördermittel 210 erreicht mit der darauf abgestellten Palette 311 die Abkommissionierstelle und stellt die Palette dort auf einer Abstellvorrichtung ab.

Das Fördermittel 211 nimmt mit der darauf abgestellten Palette 312 die zuvor von dem Fördermittel 210 belegte Warteposition ein. Dies ist unter 12. dargestellt. Ist die Palette 311 auf der Abstellvorrichtung abgestellt, so kehrt das Fördermittel 210, wie unter 13. dargestellt, von der Rückholkraft angetrieben, in seine Ausgangsstellung zurück. Ist es, wie unter 14. gezeigt dort angekommen, so steht es erneut zur Aufnahme einer Palette bereit.

Der Ablauf kann somit wie durch den verzweigten, gestrichelten Pfeil angedeutet, zu Punkt 8. springen, jedoch sind bei diesem und dem nachfolgenden Schritten in der Beschreibung die Fördermittel 210 bzw. 211 zu vertauschen.

Schreitet der Ablauf nun mit dem nächsten Schritt (15.) fort, so ist hier dargestellt, daß nunmehr auch die nächste, auf der Abstellvorrichtung abgestellte Palette 311 vollständig abkommissioniert und aus dem System entfernt wird. In diesem Falle wird das Fördermittel 211 mit der darauf abgestellten Palette 312, angetrieben durch die Schwerkraft der Palette 312, in Richtung der Abkommissionierstelle 4 bewegt. Dies ist unter 16. dargestellt. Unter 17. ist schematisch dargestellt, daß die Palette 312 nunmehr von dem Fördermittel 211 auf der Abstellvorrichtung abgestellt wird. Anschließend wird das Fördermittel 211, ausgelöst durch eine Rückholkraft, ohne die Palette 312 wieder in die Ausgangsposition zurückgeführt. Damit sind, wie unter 19. gezeigt, beide Fördermittel 210, 211 wieder in der Ausgangsposition, und es befindet sich eine Palette 312 in der Abkommissionierstelle.

Anschließend kann wie bei Schritt 6. weiter verfahren werden, was erneut durch verzweigte, gestrichelte Pfeile angedeutet ist, d. h. es wird eine weitere Palette auf ein Fördermittel, nämlich das Fördermittel 210, abgestellt, oder der Ablauf wird mit Schritt 20. fortgesetzt. In Schritt 20. ist gezeigt, daß die einzige in der Abkommissionierstelle 4 befindliche Palette 312 (im Falle, daß Schritt 20. sich direkt an Schritt 5, anschließt, die Palette 310) vollständig abkommissioniert und aus dem System entfernt wird. Somit ist anschließend der Ablauf wieder in der unter 1. dargestellten Ausgangssituation.

Auch bei den in den Fign. 6a bis 6c dargestellten Verfahren ist es selbstverständlich möglich, beispielsweise mittels eines RBG's die hinterste, im System befindliche Palette wieder aus dem System zurückzuholen. Somit kann beispielsweise insbesondere auch eine lediglich halbabkommissionierte Palette mittels eines RBG's aus der Abkommissionierstelle zurückgeholt werden.

Die gezeigten Ausführungsbeispiele dienen lediglich der Erläuterung und sollen nicht als den Umfang der beigefügten Ansprüche beschränkend verstanden werden.

### Bezugszeichenliste

- 1: Zuführstrecke
- 2: Fördermittel
- 210: Fördermittel
- 211: Fördermittel
- 3: Palette
- 30: Palette
- 31: Palette
- 310: Palette
- 311: Palette
- 312: Palette
- 4: Abkommissionierstelle
- 5: Wagen
- 50: Wagen
- 510: Wagen
- 511: Wagen
- 6: Auflagefläche
- 60: Auflagefläche
- 610: Auflagefläche
- 611: Auflagefläche
- 7: Abstellvorrichtung
- 8: Anschlag
- 9: Anschlag
- 10: Rolle
- 11: Koppelglied
- 12: Gleitstück
- 13: Wagengestell
- 14: Führungsschiene

## Patentansprüche

1. Vorrichtung zum Zuführen von Großgebinden von Waren, insbesondere von Kommissioniergütern, wie beispielsweise Paletten, zu einer Abkommissionierstelle mit:
einer geneigten, in der Abkommissionierstelle (4) mündenden Zuführstrecke (1), welche wenigstens zwei unter Belassung eines Zwischenabstandes parallel angeordnete Laufbahnen (14) aufweist,
**gekennzeichnet durch**
zwei ein Wagenpaar bildende Wagen (5; 50; 510, 511), wobei jeder der auf Laufrädem (10) laufenden Wagen (5; 50; 510, 511) in einer der Laufbahnen (14) zum Verfahren entlang der jeweiligen Laufbahn (14) angeordnet ist, wobei die Wagen (5; 50; 510, 511) jeweils absenkbare bzw. anhebbare Auflageflächen (6; 60; 610, 611) aufweisen und wobei ein Großgebinde (3; 30, 31; 310, 311, 312) auf den Auflageflächen (6; 60; 610, 611) des Wagenpaares abstellbar ist.

2. Vorrichtung nach Anspruch 1, **dadurch gekennzeichnet, daß** der Zwischenabstand zwischen den Laufbahnen (14) derart bemessen ist, daß zum Rückholen eines Großgebindes (3; 30, 31; 310, 311, 312) aus der Abkommissionierstelle (4) ein Transportmittel, beispielsweise ein Funktionselement eines Regalbediengerätes, in den Zwischenraum gelangen und an dem Großgebinde (3; 30, 31; 310, 311, 312) angreifen kann.

3. Vorrichtung nach einem der Ansprüche 1 oder 2, **gekennzeichnet durch** eine in der Abkommissionierstelle (4) angeordnete Abstellvorrichtung (7) zum Abstellen eines Großgebindes (3; 30, 31; 310, 311, 312).

4. Vorrichtung nach einem der Ansprüche 1 oder 2, **dadurch gekennzeichnet, daß** die Auflageflächen (6; 60; 610, 611) der Wagen (5; 50; 510, 511) jeweils hinsichtlich des Abstandes zu den Laufrädern (10) des Wagens (5; 50; 510, 511) höhenverstellbar sind.

5. Vorrichtung nach Anspruch 4, **dadurch gekennzeichnet, daß** die Wagen (105) jeweils ein Wagengestell (13), an dem die Laufräder angeordnet sind, und eine gegenüber dem Wagengestell (13) verschiebbare Auflagefläche (6) aufweisen und daß an dem Wagengestell (13) und der Auflagefläche (6) jeweils mit geneigten Gleitflächen versehene Gleitstücke (12) angeordnet sind, die aneinander angreifen und bei einem Verschieben von Wagengestell (13) und Auflagefläche (6) zueinander eine Höhenverstellung der Auflagefläche (6) bewirken.

6. Vorrichtung nach einem der Ansprüche 4 oder 5, **dadurch gekennzeichnet, daß** die Laufbahnen (14) jeweils ein erstes sowie ein zweites Ende aufweisen, wobei an dem ersten und dem zweiten Ende einer jeden Laufbahn (14) Anschläge (8, 9) angeordnet sind, welche eine Höhenverstellung des Abstandes der Auflageflächen (6; 60; 610, 611) der Wagen (5; 50; 510, 511) zu deren Laufrädern (10) auslösen, wenn die Wagen (5; 50; 510, 511) an ihnen anschlagen.

7. Vorrichtung nach einem der Ansprüche 4 bis 6, **gekennzeichnet durch** eine in der Abkommissionierstelle (4) angeordnete Abstellvorrichtung (7) zum Abstellen der Großgebinde mit einer Abstellfläche, wobei die Auflageflächen (6; 60; 610, 611) der Wagen (5; 50; 510, 511) in der Abkommissionerstelle (4) unterhalb des Niveaus der Abstellfläche absenkbar ist.

8. Vorrichtung nach einem der voranstehenden Ansprüche, **dadurch gekennzeichnet, daß** die Laufbahnen (14) durch U-förmige Profilschienen gebildet sind, mit einer Basis und zwei im wesentlichen parallelen, senkrecht zur Basis angeordnete Schenkeln, wobei die Laufräder (10) des Wagens (5; 50; 510, 511) auf der Basis entlang laufen.

9. Vorrichtung nach Anspruch 8, **dadurch gekennzeichnet, daß** die Schenkel der U-förmigen Profilschienen nach außen abgewinkelte Abkantungen aufweisen, wobei die Abkantungen eine Abstellvorrichtung (7) für ein Großgebinde bilden.

10. Vorrichtung nach Anspruch 9, **dadurch gekennzeichnet, daß** die Auflageflächen (6; 60; 610, 611) der Wagen (5; 50; 510, 511) zwischen einer abgesenkten Position und einer ausgestellten Position höhenverstellbar sind, wobei die Auflageflächen (6; 60; 610, 611) in der abgesenkten Position unterhalb und in der ausgestellten Position oberhalb der Abkantungen der Schenkel liegen.

11. Vorrichtung nach einem der voranstehenden Ansprüche, **gekennzeichnet durch** zwei weitere, ein zweites Wagenpaar bildende, in den Laufbahnen angeordnete Wagen, wobei die weiteren Wagen jeweils Laufräder und Auflageflächen zum Abstellen eines Großgebindes aufweisen.

12. Vorrichtung nach Anspruch 11, **dadurch gekennzeichnet, daß** die Auflageflächen der das erste Wagenpaar bildenden Wagen und die Auflageflächen der das zweite Wagenpaar bildenden Wagen jeweils zwischen einer ausgestellten und einer abgesenkten Position bezüglich ihrer Laufräder höhenverstellbar sind, wobei die Auflageflächen der das erste Wagenpaar bildenden Wagen in ihrer ausgestellten Position höher sind als die Auflageflächen der das zweite Wagenpaar bildenden Wagen in ihrer ausgestellten Position.

13. Vorrichtung nach einem der voranstehenden Ansprüche, **dadurch gekennzeichnet, daß** die Wagen mit einem eine entgegen des Gefälles der Laufbahn (14) wirkende Kraft auf die Wagen (5; 50; 510, 511) ausübenden Rückholelement verbunden sind, welches die Wagen (5; 50; 510, 511) ohne darauf abgestellte Großgebinde in einer Ausgangsposition eingangs der Laufbahnen (14) zurückführt.

14. Vorrichtung nach Anspruch 13, **gekennzeichnet durch** mit den Laufbahnen (14) eingangs derselben einerseits und den Wagen andererseits verbundene Federn als Rückholmittel.

## Claims

1. Device for delivering large receptacles holding products, in particular warehoused goods, such as, for example, pallets, to an out-processing location with:
an inclined delivery section (1) which ends in the out-processing location (4) and has at least two runways (14) arranged parallel leaving an interspace,
**characterized by** two carriages (5; 50; 510, 511) forming a carriage pair, each of the carriages (5; 50; 510, 511) running on running wheels (10) being arranged in one of the runways (14) for movement along the respective runway (14), the carriages (5; 50; 510, 511) in each case having support surfaces (6; 60; 610, 611) which can be lowered and raised, and it being possible for a large receptacle (3; 30, 31; 310, 311, 312) to be set down on the support surfaces (6; 60; 610, 611) of the carriage pair.

2. Device according to Claim 1, **characterized in that** the interspace between the runways (14) is dimensioned in such a way that, for retrieving a large receptacle (3; 30, 31; 310, 311, 312) from the out-processing location (4), a transport means, for example a functional element of a storage and retrieval unit for racking, can enter the interspace and act on the large receptacle (3; 30, 31; 310, 311, 312).

3. Device according to one of Claims 1 or 2, **characterized by** a setting-down device (7) arranged in the out-processing location (4) for setting down a large receptacle (3; 30, 31; 310, 311, 312).

4. Device according to one of Claims 1 or 2, **characterized in that** the support surfaces (6; 60; 610, 611) of the carriages (5; 50; 510, 511) are in each case height-adjustable with regard to the spacing from the running wheels (10) of the carriage (5; 50; 510, 511).

5. Device according to Claim 4, **characterized in that** the carriages (5; 50; 510, 511) in each case have a carriage frame (13), on which the running wheels are arranged, and a support surface (6) which is displaceable in relation to the carriage frame (13), and **in that** sliding blocks (12) in each case provided with inclined sliding surfaces are arranged on the carriage frame (13) and the support surface (6), which blocks act on one another and, when a displacement of the carriage frame (13) and the support surface (6) in relation to one another takes place, bring about a height-adjustment of the support surface (6).

6. Device according to one of Claims 4 or 5, **characterized in that** the runways (14) in each case have a first and a second end, stops (8, 9) being arranged at the first and the second end of each runway (14), which trigger a height-adjustment of the spacing of the support surfaces (6; 60; 610, 611) of the carriages (5; 50; 510, 511) in relation to their running wheels (10) when the carriages (5; 50; 510, 511) strike them.

7. Device according to one of Claims 4 to 6, **characterized by** a setting-down device (7), arranged in the out-processing location (4), for setting down the large receptacles with a setting-down surface, the support surfaces (6; 60; 610, 611) of the carriages (5; 50; 510, 511) being, in the out-processing location (4), lowerable below the level of the setting-down surface.

8. Device according to one of the preceding claims, **characterized in that** the runways (14) are formed by U-shaped profiled rails, with abase and two essentially parallel legs arranged at right angles to the base, the running wheels (10) of the carriage (5; 50; 510, 511) running along on the base.

9. Device according to Claim 8, **characterized in that** the legs of the U-shaped profiled rails have outwardly bent edges, the edges forming a setting-down device (7) for a large receptacle.

10. Device according to Claim 9, **characterized in that** the support surfaces (6; 60; 610, 611) of the carriages (5; 50; 510, 511) are height-adjustable between a lowered position and an extended position, the support surfaces (6; 60; 610, 611) lying below the edges of the legs in the lowered position and above the edges of the legs in the extended position.

11. Device according to one of the preceding claims, **characterized by** two additional carriages, forming a second carriage pair, arranged in the runways, the additional carriages in each case having running wheels and support surfaces for setting down a large receptacle.

12. Device according to Claim 11, **characterized in that** the support surfaces of the carriages forming the first carriage pair and the support surfaces of the carriages forming the second carriage pair are in each case height-adjustable in relation to their running wheels between an extended position and a lowered position, the support surfaces of the carriages forming the first carriage pair being higher in their extended position than the support surfaces of the carriages forming the second carriage pair are in their extended position.

13. Device according to one of the preceding claims, **characterized in that** the carriages are connected to a retrieval element which exerts a force on the carriages (5; 50; 510, 511) which acts counter to the downward incline of the runway (14) and returns the carriages (5; 50; 510, 511) without large receptacles set down thereon into a starting position at the beginning of the runways (14).

14. Device according to Claim 13, **characterized by** springs, as the retrieval means, connected to on the one hand the runways (14) at the beginning thereof and on the other hand the carriages.

## Revendications

1. Dispositif pour amener des réceptacles de grande taille de marchandises, en particulier de biens commandés, comme par exemple des palettes, à un poste d'enlèvement, comprenant :
un trajet d'amenée incliné (1) qui débouche dans le poste d'enlèvement (4) et qui comporte au moins deux pistes de roulement (14) disposées parallèlement en ménageant un intervalle, **caractérisé par** deux chariots (5 ; 50 ; 510, 511) formant une paire de chariots, chacun des chariots (5 ; 50 ; 510, 511) circulant sur des roues de déplacement (10) étant disposé dans une des pistes de roulement (14) pour se déplacer le long de la piste de roulement respective (14), les chariots (5 ; 50 ; 510, 511) comportant chacun des surfaces porteuses abaissables et, respectivement, levables (6 ; 60 ; 610, 611), et un réceptacle de grande taille (3 ; 30, 31 ; 310, 311, 312) pouvant être déposé sur les surfaces porteuses (6 ; 60 ; 610, 611) de la paire de chariots.

2. Dispositif selon la revendication 1, **caractérisé en ce que** l'intervalle entre les pistes de roulement (14) est calculé de façon que, pour ramener un réceptacle de grande taille (3 ; 30, 31 ; 310, 311, 312) du poste d'enlèvement (4), un moyen de transport, par exemple un élément fonctionnel d'un appareil de desserte de rayonnages, puisse pénétrer dans l'interstice et saisir le réceptacle de grande taille (3 ; 30, 31 ; 310, 311, 312).

3. Dispositif selon une des revendications 1 ou 2, **caractérisé par** un dispositif de dépose (7) disposé dans le poste d'enlèvement (4) pour déposer un réceptacle de grande taille (3 ; 30, 31 ; 310, 311, 312).

4. Dispositif selon une des revendications 1 ou 2, **caractérisé en ce que** les surfaces porteuses (6 ; 60 ; 610, 611) des chariots (5 ; 50 ; 510, 511) sont chacune réglables en hauteur en termes de distance par rapport aux roues de déplacement (10) du chariot (5 ; 50 ; 510, 511).

5. Dispositif selon la revendication 4, **caractérisé en ce que** les chariots (105) comportent chacun un bâti de chariot (13), sur lequel sont disposées les roues de déplacement, et une surface porteuse (6) coulissante par rapport au bâti de chariot (13), et **en ce que** sur le bâti de chariot (13) et sur la surface porteuse (6) sont disposées des pièces de glissement (12) qui sont pourvues chacune de surfaces de glissement inclinées, qui agissent l'une sur l'autre et qui, lors d'un coulissement du bâti de chariot (13) et de la surface porteuse (6) l'un par rapport à l'autre, provoquent un réglage en hauteur de la surface porteuse (6).

6. Dispositif selon une des revendications 4 ou 5, **caractérisé en ce que** les pistes de roulement (14) comportent chacune une première extrémité ainsi qu'une seconde extrémité, sur la première extrémité et sur la seconde extrémité de chaque piste de roulement (14) étant fixées des butées (8, 9) qui, lorsque les chariots (5 ; 50 ; 510, 511) arrivent à leur contact, déclenchent un réglage en hauteur de la distance des surfaces porteuses (6 ; 60 ; 610, 611) des chariots (5 ; 50 ; 510, 511) par rapport aux roues de déplacement (10) de ceux-ci.

7. Dispositif selon une des revendications 4 à 6, **caractérisé par** un dispositif de dépose (7) disposé dans le poste d'enlèvement (4) pour déposer les réceptacles de grande taille avec une surface de dépose, les surfaces porteuses (6 ; 60 ; 610, 611) des chariots (5 ; 50 ; 510, 511) dans le poste d'enlèvement (4) étant abaissables au-dessous du niveau de la surface de dépose.

8. Dispositif selon une des revendications précédentes, **caractérisé en ce que** les pistes de roulement (14) sont formées par des rails profilés en forme de U, avec une base et deux ailes disposées sensiblement parallèlement, perpendiculairement à la base, les roues de déplacement (10) du chariot (5 ; 50 ; 510, 511) circulant le long de la base.

9. Dispositif selon la revendication 8, **caractérisé en ce que** les ailes des rails profilés en forme de U comportent des parties coudées rabattues vers l'extérieur, les parties coudées formant un dispositif de dépose (7) pour un réceptacle de grande taille.

10. Dispositif selon la revendication 9, **caractérisé en ce que** les surfaces porteuses (6 ; 60 ; 610, 611) des chariots (5 ; 50 ; 510, 511) sont réglables en hauteur entre une position abaissée et une position sortie, les surfaces porteuses (6 ; 60 ; 610, 611) se trouvant, dans la position abaissée, au-dessous des parties coudées des ailes et, dans la position sortie, au-dessus de celles-ci.

11. Dispositif selon une des revendications précédentes, **caractérisé par** deux chariots supplémentaires formant une seconde paire de chariots, disposés dans les pistes de roulement, les chariots supplémentaires comportant chacun des roues de déplacement et des surfaces porteuses pour déposer un réceptacle de grande taille.

12. Dispositif selon la revendication 11, **caractérisé en ce que** les surfaces porteuses des chariots formant la première paire de chariots et les surfaces porteuses des chariots formant la seconde paire de chariots sont chacune réglables en hauteur entre une position sortie et une position abaissée par rapport à leurs roues de déplacement, les surfaces porteuses des chariots formant la première paire de chariots étant plus haut dans leur position sortie que les surfaces porteuses des chariots formant la seconde paire de chariots dans leur position sortie.

13. Dispositif selon une des revendications précédentes, **caractérisé en ce que** les chariots sont reliés à un élément de rappel qui exerce sur les chariots (5 ; 50 ; 510, 511) une force agissant à l'opposé de la pente de la piste de roulement (14) et qui ramène les chariots (5 ; 50 ; 510, 511), sans réceptacle de grande taille déposé dessus, dans une position initiale au début des pistes de roulement (14).

14. Dispositif selon la revendication 13, **caractérisé par** des ressorts, faisant fonction de moyens de rappel, reliés, d'une part, aux pistes de roulement (14) au début de celles-ci et, d'autre part, aux chariots.
